# EUROPÄISCHE PATENTSCHRIFT

(11) **EP 1 668 275 B1**
(45) Veröffentlichungstag und Bekanntmachung des Hinweises auf die Patenterteilung: **11.11.2009**
(21) Anmeldenummer: 04763647.7
(22) Anmeldetag: 30.07.2004
(51) Int. Cl.: F16H 61/30

(54) **GETRIEBE MIT ELEKTRO-PNEUMATISCHE SCHALTEINHEIT**
GEARBOX WITH ELECTRO-PNEUMATIC SWITCH UNIT
BOÎTE DE VITESSES AVEC BOÎTE DE COMMUTATION ELECTRO-PNEUMATIQUE

(30) Priorität: 26.08.2003 DE 10339151
(43) Veröffentlichungstag der Anmeldung: 14.06.2006
(73) Patentinhaber: ZF FRIEDRICHSHAFEN Aktiengesellschaft, 88038 Friedrichshafen (DE)
(72) Erfinder: FISCHER, Dieter, 88149 Nonnenhorn (DE)
(86) Internationale Anmeldenummer: PCT/EP2004/008563
(87) Internationale Veröffentlichungsnummer: WO 2005/022007

(56) Entgegenhaltungen:
- WO-A-2004/042259
- DE-A- 10 029 497
- DE-A- 19 839 854
- DE-A- 19 900 820

## Beschreibung

Die vorliegende Erfindung betrifft ein Getriebe mit einer elektropneumatischen Schalteinheit für ein Kraftfahrzeug welches eine Servounterstützungseinrichtung umfasst, die den Fahrzeugführer bei der manuellen Schaltung unterstützt, nach dem Oberbegriff des Anspruchs 1.

Hierbei kann es sich um Getriebe umfassend ein-manuell vom Fahrer an einem Handschalthebel schaltbares Hauptgetriebeteil, ein über Ventile pneumatisch schaltbares Splitgruppengetriebe und ein über Ventile pneumatisch schaltbares Bereichsgruppengetriebe handeln oder um Getriebe ohne Splitgruppengetriebe und Bereichsgruppengetriebe, wie z.B. ein Sechs-Gang-Getriebe.

Getriebe von größeren Nutzfahrzeugen sind in einen Hauptgetriebeteil, ein Splitgruppengetriebe (GV) und ein Bereichsgruppengetriebe (GP) aufgeteilt. Moderne Getriebe vor allem in Nutzfahrzeugen weisen dabei eine durch eine Pneumatik unterstützte Schalteinrichtung auf, die pneumatische Schaltungen im Splitgruppengetriebe und im Bereichsgruppengetriebe durchführt, während die Schaltungen im Hauptgetriebeteil manuell vom Fahrzeugführer durchgeführt werden und dabei in der ausübenden Kraft durch die Pneumatik unterstützt werden können.

Zur Steuerung und Absicherung der modernen Kraftfahrzeuggetriebe werden in zunehmendem Maße elektrische und elektronische Bauteile vorgesehen. Diese Bauteile dienen, neben anderen Zwecken, auch der Verhinderung von Schaltungen im Getriebe, die auf Grund sonstiger Bedingungen; wie insbesondere zu hoher Fahrzeuggeschwindigkeiten bezogen auf den zu schaltenden Gang, nicht zulässig sind.

Aus der DE 198 39 854 A1, welche die Merkmale des Oberbegriffs des 1, Anspruchs offenbart, ist eine Schaltvorrichtung bekannt geworden, bei der eine Servounterstützungseinrichtung die Schaltkraft des Fahrers unterstützt. Dabei soll die Zufuhr der unterstützenden Druckluft reduziert werden und beispielsweise nur dann zugelassen werden, wenn die Fahrzeugkupplung betätigt wird. Dafür sind zusätzliche Ventile erforderlich, die die Reduzierung ermöglichen.

Eine elektro-pneumatische Schalteinheit mit Schutzmassnahmen gegen unzulässige Schaltungen ist aus der DE 100 29 497 A1 bekannt. Diese elektro-pneumatische Schalteinheit für ein Fahrzeuggetriebe weist ein über Ventile pneumatisch schaltbares Splitgruppengetriebe und ein über Ventile pneumatisch schaltbares Bereichsgruppengetriebe auf, deren Schaltungen manuell vom Fahrzeugführer an einem Schalthebel vorwählbar sind, wobei es mit einer Sperreinrichtung zur mechanischen Unterbindung der manuellen Schaltung nicht zulässiger übersetzungsverhältnisse versehen ist. Weiterhin ist eine Sperreinrichtung zur Unterbindung der pneumatischen Schaltung nicht zulässiger Übersetzungsverhältnisse des Fahrzeuggetriebes und eine elektronische Steuereinrichtung vorgesehen, wobei die Ventile des Splitgruppengetriebes und die Ventile des Bereichsgruppengetriebes elektromagnetisch betätigte Pneumatikventile sind, die in einem gemeinsamen Gehäuse angeordnet sind. Ihre Vorwahl erfolgt durch mit einer Steuereinrichtung verbundene elektrische Schalter am Handschalthebel.

Die erste Sperreinrichtung besteht in diesem Fall aus einem Gassensperrzylinder, der in der langsamen Übersetzungsstufe des Bereichsgruppengetriebes oberhalb einer bestimmten Abtriebsdrehzahl des Getriebes das Schalten von einer bestimmten Schaltgasse in eine andere bestimmte Schaltgasse verhindert um den Fahrzeugführer davor zu bewahren, irrtümlich in eine unzulässige Obersetzungsstufe zu schalten, wenn er vergessen hat, die entsprechende Übersetzung im Bereichsgruppengetriebe vorzuwählen. Die zweite Sperreinrichtung ist eine Gruppensperre, die oberhalb einer vorgegebenen Fahrzeuggeschwindigkeit das Schalten des Bereichsgruppengetriebes in die langsame Übersetzung verhindert um dadurch sowohl die Synchronisierung des Bereichsgruppengetriebes als auch die Synchronisierungen des Hauptgetriebeteils zu schützen.

Schließlich beschreibt die DE 102 17 482 A1 eine elektro-pneumatische Schalteinheit, bei der ohne großen Zusatzaufwand die Zufuhr an unterstützender Druckluft bestimmt werden kann.

Eine derartige elektro-pneumatische Schalteinheit für ein Fahrzeuggetriebe umfasst ein manuell vom Fahrzeugführer an einem Schalthebel geschaltetes Hauptgetriebe, ein über Ventile elektro-pneumatisch geschaltetes Splitgruppengetriebe und ein Bereichsgruppengetriebe.

Die Schaltungen des Splitgruppengetriebes sind manuell vom Fahrzeugführer durch Schalter am Schalthebel vorwählbar. Ein Sensor oder Schalter erkennt eine manuelle Betätigung der Fahrzeugkupplung durch den Fahrzeugführer und gibt dieses Signal an eine elektronische Steuereinrichtung weiter, die dann die Ventile öffnet.

Die Ventile übernehmen hierbei die zusätzliche Funktion, bei jeder Betätigung der Kupplung bzw. bei jedem Erreichen des Kupplungstrennpunktes Luft an das Wechselventil und damit an die Servounterstützungseinrichtung freizugeben, sodass nur im ausgekuppelten Zustand eine Zufuhr der die Handschaltkraft unterstützenden Servokraft zugelassen wird. Auch bei dieser Schalteinheit sind, um Fehlschaltungen zu vermeiden, ein Gassensperrzylinder und eine Gruppensperre vorgesehen.

Aufgabe der vorliegenden Erfindung ist es, eine elektro-pneumatische Schalteinheit für ein Getriebe eines Kraftfahrzeuges, welches eine Servounterstützungseinrichtung umfasst, die den Fahrzeugführer bei der manuellen Schaltung unterstützt, dahingehend auszugestalten, dass der Servodruck in Abhängigkeit von der Schaltgasse einstellbar ist.

Die Lösung dieser Aufgabe erfolgt mit den im Anspruch 1 angegebenen Merkmalen. Vorteilhafte Ausgestaltungen sind in den Unteransprüchen beschrieben.

Erfindungsgemäß ist also ein Ventil vorgesehen, welches in Abhängigkeit von der Position der Schaltwelle über ein Druckreduzierventil den Servodruck reduziert bzw. anpasst.

Weiter ist für den Fall eines Gruppengetriebes mit einer mechanischen Gassensperre, wobei ein Kolben, der bei versuchten Fehlschaltungen über ein Ventil mit Druck beaufschlagt wird, über eine Klinke die Schaltwelle beaufschlagt, so dass die Schaltwelle in ihrer momentanen Schaltgasse gehalten oder in eine zulässige Schaltgasse bewegt wird, bis die zulässigen Schaltbedingungen im Getriebe erreicht sind, vorgesehen, dass die Kolbenstange durch den Boden des Gassensperrzylinders hindurchgeführt wird.

Auf diese Weise kann ein Ventil angesteuert werden, welches seinerseits einen Steuerdruck auf den Kolben eines Druckreduzierventils schaltet, wodurch in der Servounterstützungseinrichtung verschiedene Druckniveaus bis hin zur vollständigen Luftabsperrung realisiert werden können. Die Druckniveaus können in Abhängigkeit von der Position der Schaltwelle bzw. von der Schaltgasse bestimmt werden, da über die Klinke und die Kolbenstange des Gassensperrzylinders die Position der Schaltwelle und dadurch die Schaltgasse erkennbar ist.

Um die Erkennung der Schaltgasse auf das Ventil zu übertragen, sind keine zusätzlichen Bauteile erforderlich, wodurch zum einen der Bauraum verringert und zum anderen die Herstellungskosten gesenkt werden können.

Für den Fall eines Getriebes ohne Gassensperre, z.B. für ein Sechs-Gang-Getriebe, wird vorgeschlagen, das Ventil direkt an der Schaltwelle anzuordnen, derart, dass der Ventilstößel in Abhängigkeit von der Stellung der Schaltwelle bewegbar ist. Dies kann z.B. dadurch erfolgen, dass das Ventil radial an der Schaltwelle angeordnet ist und durch die Schräge der Schaltwelle in Abhängigkeit von deren axialen Position betätigt wird. Es ist auch möglich, das Ventil axial vor der Schaltwelle anzuordnen, derart, dass es in Abhängigkeit von deren Position direkt ansteuerbar ist.

Im Folgenden wird die Erfindung an Hand der Zeichnung beispielhaft näher erläutert, in denen vorteilhafte Ausführungsbeispiele dargestellt sind; es zeigen:
- Fig. 1: ein Schema einer ersten Ausführungsform ei- ner Schalteinheit gemäß der vorliegenden Er- findung;
- Fig. 2: ein Schema einer zweiten Ausführungsform einer Schalteinheit gemäß der vorliegenden Erfindung und
- Fig. 3: eine vereinfachte Darstellung einer dritten Ausführungsform.

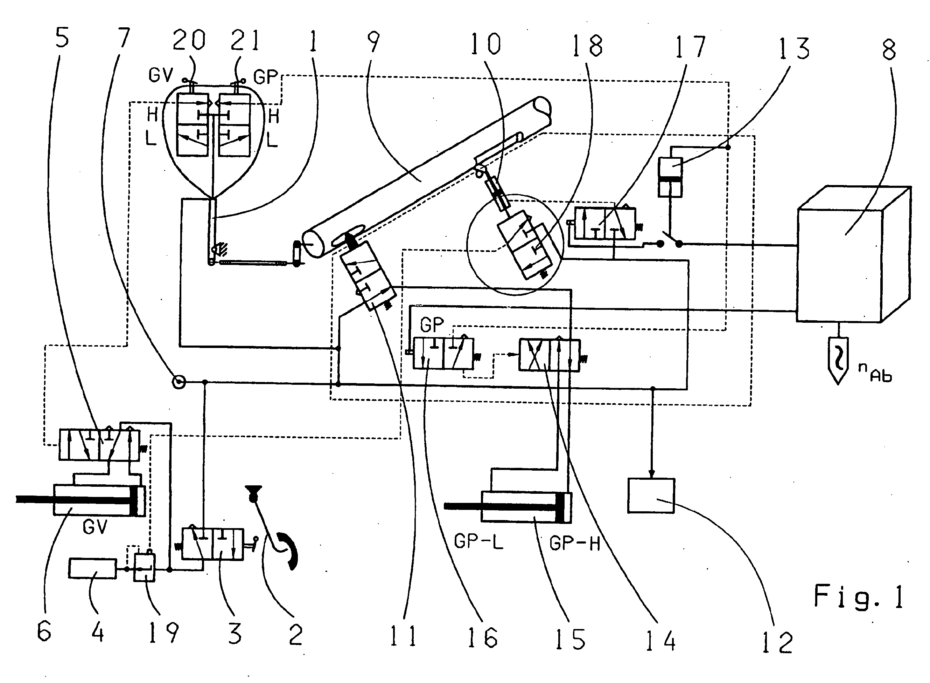

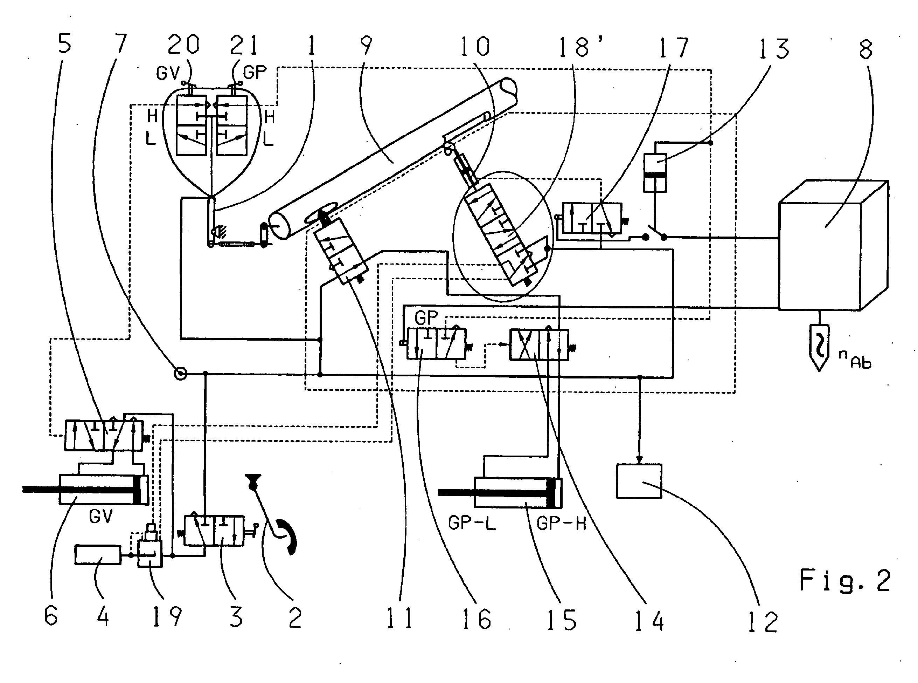

In den Fig. 1 und 2, welche die Erfindung anhand einer Schalteinheit mit Gassensperre veranschaulichen, ist mit 1 ein Schalthebel bezeichnet, dessen Schaltbild einem "überlagerten H" entspricht. Dem Schalthebel ist ein erster Schalter 20 zugeordnet zur Vorwahl des Splitgruppengetriebes und ein zweiter Schalter 21 zugeordnet für das Bereichsgruppengetriebe. Bei einer Schaltung mit dem erwähnten Schaltbild sind in den Vorwärtsgängen jeder Endstellung des Schalthebels 1 zwei Übersetzungsstufen zugeordnet, die sich jeweils um den übersetzungssprung des Bereichsgruppengetriebes unterscheiden. Bei der Schalterstellung "langsam" (L) sind die Übersetzungsverhältnisse eins bis vier geschaltet sowie der Rückwärtsgang und bei der SchalterStellung "schnell" (H) sind die Gänge fünf bis acht geschaltet. Die Neutralstellung des Hauptgetriebeteils befindet sich in der Mitte zwischen den Übersetzungsverhältnissen einer Schaltgasse.

Den Wechsel des Bereichsgruppengetriebes muss der Fahrzeugführer mittels des ersten Schalters 20 am Schalthebel 1 durchführen. Der Wechsel wird ausgeführt, sobald im Hauptgetriebeteil manuell die Neutralstellung eingelegt wird.

Das Splitgruppengetriebe wird durch den zweiten Schalter 21 vorgewählt und durch die Betätigung der Kupplung geschaltet. Das Kupplungspedal 2 wirkt mit einem GV-Auslöseventil 3 zusammen, das in eine Leitung eingesetzt ist, die einerseits mit der Servounterstützungseinrichtung 4 und mit einem GV-Umschaltventil für die Ansteuerung des GV-Zylinders 6 verbunden ist und andererseits mit dem Luftvorratsbehälter 7. Mit 8 ist die elektronische Steuereinrichtung bezeichnet, mit 9 die Schaltwelle, mit 10 der Gassensperrzylinder, mit 11 ein Hauptabschaltventil, mit 12 die Kupplung, mit 13 ein Druckschalter, mit 14 ein GP-Umschaltventil, mit 15 ein GP-Zylinder, mit 16 ein GP-Auslöseventil und mit 17 ein Gassensperrventil. Die Schaltung im Splitgruppengetriebe GV ist immer möglich und nur von der entsprechenden Stellung des zuständigen Schalters 20 am Schalthebel 1 bestimmt.

Um Fehlschaltungen im Hauptgetriebe zu vermeiden, die in Verbindung mit der Gruppenumschaltung auftreten können, wird die mechanische Gassensperre 10 verwendet. Ein Kolben, welcher bei Fehlschaltungen über das Gassensperrventil 17 mit Druck beaufschlagt wird, greift über eine Klinke in die Schaltwelle 9 ein. Die Schaltwelle wird dadurch in der momentanen Schaltgasse gehalten oder in eine Schaltgasse bewegt, bis zulässige Schaltbedingungen im Getriebe erreicht sind. über die Klinke und die Kolbenstange des Gassensperrzylinders 10 ist somit die Position der Schaltwelle 9 und damit der Schaltgasse, zum Beispiel die Schaltgasse 1/2. (5/6), 3/4 (7/8) und Rückwärtsgang erkennbar. Ragt nun die Kolbenstange durch den Boden des Gassensperrzylinders 10 hindurch, so kann dadurch ein Ventil 18, 18' angesteuert werden, welches seinerseits einen Steuerdruck auf den Kolben eines Druckreduzierventils 19 schaltet, woraufhin in der Servounterstützungseinrichtung 4 verschiedene Druckniveaus bis hin zur Servoluftabsperrung realisiert werden können. Dadurch ist es beispielsweise möglich, in der Schaltgasse 1/2 den vollen Druck, in der Schaltgasse 3/4. einen reduzierten Druck mittels eines 3/2-Wegeventils 18 (Fig. 1) und bei Verwendung zum Beispiel eines 5/3-Wegeventiles 18' in der Schaltgasse für den Rückwärtsgang den Druck vollständig abzusperren (Fig. 2). Je nach Ventilausführung ist eine unterschiedliche Anzahl an Servodruckniveaus erzielbar.

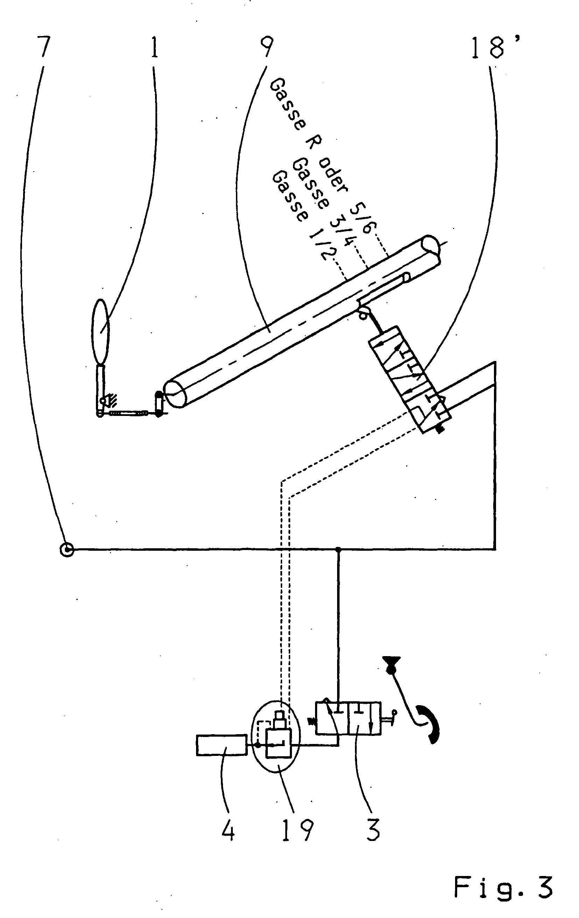

Fig. 3 zeigt ein Schema in vereinfachter Darstellung für den gassenabhängigen Servodruck für zum Beispiel die drei Schaltgassen 1/2, 3/4, 5/6 oder den Rückwärtsgang R über ein 5/3-Wegeventil 18' für den Fall, dass keine Gassensperre vorgesehen ist. Zum Zwecke der Vollständigkeit ist auch das Ventil 3, was bei Betätigung des Kupplungspedals 2 angesteuert wird, dargestellt.

Hierbei ist das Ventil 18' direkt an der Schaltwelle 9 angeordnet, derart, dass der Ventilstößel in Abhängigkeit von der Stellung der Schaltwelle bewegbar ist. Dies kann dadurch erfolgen, dass das Ventil 18' radial an der Schaltwelle 9 angeordnet ist und durch die Schräge der Schaltwelle in Abhängigkeit von deren axialen Position betätigt wird.

Die in den Fig. 1 und 2 dargestellten Zylinder 6 und 15 für eine pneumatische Schaltung des Splitgruppengetriebes und des Bereichsgruppengetriebes müssen im Fahrzeug nicht gleichzeitig vorgesehen sein. Prinzipiell genügt das Vorhandensein entweder einer pneumatischen Schaltung des Splitgruppengetriebes oder des Bereichsgruppengetriebes oder gar nur das Vorhandensein einer pneumatischen Servounterstützungseinrichtung ohne ein pneumatisch geschaltetes Gruppengetriebe.

### Bezugszeichen

- 1: Schalthebel
- 2: Kupplungspedal
- 3: Ventil
- 4: Servounterstützungseinrichtung
- 5: Umschaltventil
- 6: GV-Zylinder
- 7: Luftvorrat
- 8: Steuereinrichtung
- 9: Schaltwelle
- 10: Gassensperrzylinder
- 11: Abschaltventil
- 12: Kupplung
- 13: Druckschalter
- 14: Umschaltventil
- 15: GP-Zylinder
- 16: GP-Auslöseventil
- 17: Gassensperrventil
- 18: 3/2-Wegeventil
- 18': 5/3-Wegeventil
- 19: Druckreduzierventil
- 20: Schalter
- 21: Schalter

## Patentansprüche

1. Getriebe mit einer Elektro-pneumatischen Schalteinheit für ein Kraftfahrzeug, welches eine Servounterstützungseinrichtung (4) umfasst, die den Fahrzeugführer bei der manuellen Schaltung unterstützt, und ein Ventil (18, 18') vorgesehen ist, welches in Abhängigkeit von der Position der Schaltwelle (9) bzw. von der Schaltgasse über ein Druckreduzierventil (19) den Servodruck reduziert bzw. anpasst, **dadurch gekennzeichnet, dass** das Ventil (18, 18'), welches das Druckreduzierventil (19) mit einem Steuerdruck beaufschlagt, von einer den Boden eines mechanischen Gassensperrzylinders (10) durchragenden Kolbenstange betätigt wird.

2. Getriebe mit einer Elektro-pneumatischen Schalteinheit nach Anspruch 1, **dadurch gekennzeichnet, dass** das Ventil (18, 18') als ein 3/2-Wegeventil (18) oder als 513-Wegeventit (18') ausgebildet ist, wobei je nach Ventilausführung eine unterschiedliche Anzahl an Servodruckniveaus erzielbar ist

## Claims

1. Gearbox having an electro-pneumatic shifting unit for a motor vehicle, which gearbox comprises a servo assistance device (4) which assists the vehicle driver during the manual shifting operation, and a valve (18, 18') is provided which reduces or adapts the servo pressure via a pressure-reducing valve (19) as a function of the position of the shift shaft (9) and/or as a function of the shift gate, **characterized in that** the valve (18, 18') which loads the pressure-reducing valve (19) with a control pressure is actuated by a piston rod which penetrates the base of a mechanical gate locking cylinder (10).

2. Gearbox having an electro-pneumatic shifting unit according to Claim 1, **characterized in that** the valve (18, 18') is configured as a 3/2-way valve (18) or as a 5/3-way valve (18'), it being possible for a different number of servo pressure levels to be achieved depending on the valve embodiment.

## Revendications

1. Boîte de vitesses avec unité de commutation électro-pneumatique pour un véhicule automobile, qui comprend un dispositif à assistance par asservissement (4), qui assiste le conducteur du véhicule lors du changement de vitesse manuel, une soupape (18, 18') étant prévue, laquelle réduit ou adapte, en fonction de la position de l'arbre de changement de vitesse (9) ou de la voie de changement de vitesse, la pression d'asservissement par le biais d'une soupape de réduction de pression (19), **caractérisée en ce que** la soupape (18, 18') qui sollicite la soupape de réduction de pression (19) avec une pression de commande est actionnée par une tige de piston traversant le fond d'un cylindre de blocage de voie mécanique (10).

2. Boîte de vitesses avec unité de commutation électro-pneumatique selon la revendication 1, **caractérisée en ce que** la soupape (18, 18') est réalisée sous forme de soupape à 3/2 voies (18) ou sous forme de soupape à 5/3 voies (18'), un nombre différent de niveaux de pression d'asservissement pouvant être obtenu en fonction de la réalisation de la soupape.
